# FASCICULE DE BREVET EUROPEEN

(11) **EP 0 507 064 B1**
(45) Date de publication et mention de la délivrance du brevet: **31.05.1995**
(21) Numéro de dépôt: 92102486.5
(22) Date de dépôt: 14.02.1992
(51) Int. Cl.: A23L 3/3472, A23L 1/221

(54) **Procédé d'obtention d'un extrait liquide d'antioxydant d'épices**
Verfahren zur Herstellung eines flüssigen Antioxydationsextraktes aus Gewürzen
Process for preparing a liquid antioxydant extract of spices

(30) Priorité: 30.03.1991 EP 91105128
(43) Date de publication de la demande: 07.10.1992
(73) Titulaire: SOCIETE DES PRODUITS NESTLE S.A., 1800 Vevey (CH)
(72) Inventeur: Aeschbach, Robert, CH-1800 Vevey (CH); Wille, Hans-Juergen, CH-1844 Villeneuve (CH)

(56) Documents cités:
- EP-A- 0 038 959
- EP-A- 0 307 626
- FR-A- 2 513 262
- GB-A- 2 184 341
- US-A- 3 732 111
- US-A- 3 950 266
- DATABASE WPIL Section Ch, Week 8403, Derwent Publications Ltd., London, GB; Class B07, AN 84-015010

## Description

L'invention concerne un procédé d'obtention d'un extrait liquide antioxydant d'épice.

Dans les procédés classiques de préparation d'extrait d'antioxydants naturels à partir d'épices, on arrive à un produit final qui est généralement une poudre. Cette poudre n'est pas toujours utilisable telle quelle car son incorporation dans certains milieux notamment liquides peut poser des problèmes de complète solubilisation qui rendent le produit final inacceptable. Pour certaines utilisations, on est donc amené à envisager au préalable une mise en solution de la poudre antioxydante en phase liquide. On utilise de préférence comme phase liquide une huile comestible neutre et inerte. Mais même lors de l'incorporation de la poudre dans une huile, il se forme des précipités qui sont difficiles à éliminer par filtration et qui sont gênants durant la préparation des produits à stabiliser pour des raisons technologiques et d'apparence.

Le brevet GB 2184241 concerne un procédé de préparation d'un extrait liquide antioxydant d'épices, comme la sauge et le romarin, dans lequel on prévoit une première extraction avec un solvant comestible.

La demande de brevet JP 58-208 383 (Hasegawa Koryo KK) concerne un antioxydant liquide contenant un mélange de triglycérides d'acides gras saturés en C₆-C₁₂ et des antioxydants naturels de la sauge et du romarin. Ces épices sont extraites de manière classique, séchées et mélangées avec ledit mélange de triglycérides. L'inconvénient de ce système est qu'il ne permet pas d'obtenir un concentrat d'antioxydant limpide, et/ou d'autre part lors du stockage, il y a création de dépôts en raison de la présence de constituants partiellement solubles dans le triglycéride et évolution vers un effet thixotrope.

Le fait d'avoir un produit liquide antioxydant non limpide rend ledit produit inhomogène et plus difficile à incorporer dans le composé à traiter.

Le but de la présente invention est de mettre au point un procédé de mise en solution liquide d'anti-oxydants naturels, dans lequel on obtient une composition limpide, non thixotrope et qui ne forme aucun dépôt lors de stockage prolongé.

L'invention concerne un procédé d'obtention d'un extrait liquide antioxydant d'épices, dans lequel on mélange un extrait de cet épice obtenu à partir d'un solvant polaire avec une huile saturée, on évapore le solvant polaire, on ajoute un solvant non polaire à la pâte ainsi obtenue, on homogénéise, on sépare le précipité et on évapore le solvant non polaire pour obtenir une huile limpide d'extrait d'antioxydant.

Le procédé selon l'invention peut être mis en oeuvre en une seule étape (exemples 1 à 3 et 5), c'est-à-dire qu'on mélange directement toute la quantité d'extrait d'épices avec l'huile saturée pour obtenir après le traitement précité une huile limpide d'extrait d'antioxydant.

Mais pour des raisons pratiques on peut aussi mettre en oeuvre le procédé en plusieurs étapes à partir du mélange d'extrait d'épice fractionné, ce qui diminue pour chaque fraction la teneur de substances insolubles dans l'huile qu'on souhaite éliminer (exemple 4). On opère alors comme précédemment mais avec seulement une fraction de l'extrait d'épice pour obtenir une huile limpide d'extrait antioxydant. On mélange ensuite une seconde fraction d'extrait d'épices dans le solvant polaire avec l'huile précitée et on répète les opérations précédentes, à savoir évaporation du solvant polaire, addition de solvant non polaire à la pâte ainsi obtenue, homogénéisation, séparation du précipité et évaporation du solvant non polaire pour obtenir une nouvelle huile limpide d'extrait antioxydant. Si on a fractionné en plus de deux fractions, on peut alors continuer la mise en oeuvre du procédé en répétant les opérations comme indiqué précédemment. Dans la suite de la description, on envisage le procédé en une seule étape, mais il est bien entendu que ce qui est dit pour une étape est aussi valable si on opère en plusieurs étapes.

La composition lipidique obtenue selon l'invention trouve ainsi des applications dans les huiles de friture, la mayonnaise, la margarine, mais aussi dans le salami, le jambon, les céréales, les poissons et tout autre produit alimentaire, cosmétique ou pharmaceutique nécessitant une protection contre l'oxydation.

Comme épice utilisable au départ, on peut traiter toute épice contenant des principes antioxydants comme la sauge, le romarin, le thym, l'origan, la sarriette seuls ou en mélange. Par épice, on entend aussi bien l'épice entière ou moulue que des résidus d'épice, c'est-à-dire des épices ayant subi une distillation à la vapeur d'eau ou même des épices ayant subi le traitement selon le brevet EP 307 626.

Le solvant polaire utilisé est choisi parmi les alcools en C₁-C₄, les cétones volatiles, l'acétone et la méthyl-éthyl cétone, l'acétate d'éthyle ou l'éther diéthylique. On utilise de préférence l'éthanol ou le méthanol. Par extrait d'épice obtenu à partir d'un solvant polaire, on entend l'extrait obtenu en opérant par reflux, par percolation, à contre-courant, en continu ou par charge sur l'épice à traiter. Cet extrait contient la plus grande partie des composants antioxydants de l'épice.

L'huile utilisée doit être liquide à température ambiante et préférablement jusqu'à la température de stockage dans un réfrigérateur. Elle est choisie parmi un mélange de triglycérides d'acides gras saturés en C₆-C₁₂, l'huile d'olive, l'huile d'hybride de tournesol, l'huile d'hybride de carthame, l'oléine de beurre de cacao et l'oléine de graisse de sal. Le mélange de triglycéride est de préférence celui d'acides gras en C₈-C₁₀ à savoir acide caprylique et caprique. La phase d'extrait de solvant polaire doit être exempte de toute particule non dissoute (substances apolaires) avant l'addition de l'huile.

On mélange l'huile à la phase d'extrait de solvant polaire dans un rapport en poids huile sur extrait sec d'épice compris entre 10:1 et 1:2. On évapore ensuite complètement le solvant polaire par chauffage sous vide et on obtient une pâte, présentant le désavantage d'être visqueuse et trouble et contenant une partie importante de substances insolubles dans l'huile. Il est très difficile à partir de cette pâte mielleuse d'opérer la séparation des substances insolubles, en particulier par des procédés classiques, tels que filtration et centrifugation. On arrive à résoudre le problème par un traitement chimique avec un solvant non polaire permettant d'éliminer les composants responsables des difficultés de filtration et de thixotropie.

L'addition de solvant non polaire à cette pâte a donc d'une part la fonction de pouvoir diluer le mélange pour permettre une filtration et d'autre part précipite les substances partiellement solubles dans l'huile. On ajoute le solvant non polaire dans un rapport en poids huile sur solvant non polaire compris entre 1:5 et 1:20 et on homogénéise la suspension résultante par agitation à température ambiante. Comme déjà mentionné ci-dessus, le solvant non polaire précipite quelques constituants de l'épice traitée qui sont partiellement solubles dans l'huile et qui sans traitement au solvant non polaire, précipiteraient ultérieurement pendant le stockage du produit.

On effectue ensuite une filtration sous pression et on rince le précipité avec le solvant non polaire pour que toute la matière antioxydante et l'huile passent bien dans la phase solvant non polaire. Avant de faire cette filtration il est préférable de compléter le précipitation par exemple en laissant reposer le mélange huile solvant non polaire pendant environ une dizaine d'heures à une température de l'ordre de 4 à 20°C ou en faisant passer ce mélange dans un échangeur de chaleur à surface raclée à basse température. Après la filtration, on évapore le solvant non polaire pour obtenir une huile limpide.

Au cas ou un léger trouble se forme, on retraite l'huile une deuxième fois avec un solvant non polaire à 4°C, on laisse reposer, on filtre et on évapore le solvant non polaire pour récupérer une huile complètement limpide.

Le solvant non polaire utilisé est choisi parmi les hydrocarbures saturés en C₅-C₈, ramifiés ou non, cyclisés ou non, y compris leurs mélanges, les hydrocarbures aromatiques volatils et les solvants chlorés. On utilise de préférence l'hexane, le cyclohexane ou l'éther de pétrole.

On prépare de manière préférentielle une composition lipidique contenant entre 2 et 7% de composants antioxydants.

Lorsqu'on a l'extrait liquide d'épice, suivant le type d'épice, il peut être nécessaire de décolorer et désodoriser la composition. Pour décolorer, on mélange la composition avec du charbon actif ou de la terre décolorante, on chauffe pendant moins d'une heure et on fait une filtration. Les substances responsables de la couleur sont adsorbées sur le charbon actif ou la terre décolorante.

Pour désodoriser, on fait préférablement une distillation sous vide à contre-courant en film tombant ou en couche mince avec de la vapeur surchauffée.

Outre le romarin et la sauge, on connaît d'autres épices pour leur propriété antioxydante, par exemple le thym, l'origan, la sarriette ou les clous de girofle. Les principes antioxydants de ces épices sont des substances liquides, ou des substances volatiles qui sont partiellement hydrosolubles. Ces épices se prêtent donc bien pour préparer un extrait antioxydant sous forme liquide selon le procédé de l'invention.

On peut traiter selon l'invention un mélange d'épices; on extrait dans ce cas les oléorésines du mélange d'épice qu'on dissout ensuite dans l'huile en utilisant la technique selon l'invention pour obtenir un produit fortement aromatique contenant à la fois les huiles essentielles et les antioxidants des épices.

La suite de la description est faite en référence aux exemples.

### Exemple 1

On dissout 1,8 kg d'extrait de romarin obtenu selon le procédé du brevet EP 307 626 à température ambiante dans 36 l d'éthanol et on mélange la solution obtenue avec 3 kg de mélange de triglycérides d'acides gras saturés en C₆-C₁₂. On chasse l'éthanol sous vide à température ambiante et on mélange la pâte obtenue à 20°C avec 30 l d'hexane. On agite la suspension pendant 60 minutes sous atmosphère d'azote. On laisse reposer une nuit, on filtre et on élimine le gâteau de filtration qu'on lave au préalable avec l'hexane pour bien récupérer toute la matière antioxydante et l'huile. On évapore l'hexane sous vide et on obtient 3,10 kg d'huile orange limpide contenant 3,6% de constituants antioxydants.

Cette huile ne donne aucun dépôt après stockage pendant 6 mois et elle reste bien limpide.

### Exemple 2

On extrait 15 kg de romarin moulu 2 fois à 20°C avec 75 l d'éthanol à 94% sous agitation pendant deux heures et sous atmosphère d'azote. On mélange la phase éthanolique après filtration avec 3,75 kg de mélange de triglycérides d'acides gras saturés en C₆-C₁₂ et on concentre sous vide pour éliminer complètement l'éthanol. A la pâte ainsi obtenue on mélange 30 l d'hexane à 60°C et on agite la solution obtenue une nuit à 12°C. On filtre à 12°C, on met au rebut le gâteau de filtration qu'on lave au préalable une fois à l'hexane. On chasse l'hexane sous vide et on obtient 3,8 kg d'huile brune limpide contenant 3,4% de composants antioxydants.

### Exemple 3

On extrait 15 kg de romarin moulu 2 fois sous reflux avec 75 l d'éthanol à 94% sous agitation pendant deux heures et sous atmosphère d'azote. On mélange la phase éthanolique avec 2,7 kg de mélange de triglycérides d'acides gras saturés en C₆-C₁₂ et on concentre sous vide pour éliminer complètement l'éthanol. A la pâte ainsi obtenue, on mélange 30 l d'hexane à 60°C et on agite la solution obtenue une nuit à 12°C. On filtre très lentement à 12°C après adjonction de 2 kg de Celite (aide de filtration) et on lave le gâteau de filtration deux fois à l'hexane. On chasse l'hexane sous vide et on obtient 2,93 kg d'huile brune limpide contenant 4,2% de composés antioxydants.

### Exemple 4

On dissout 1,5 kg d'extrait de romarin obtenu selon le procédé du brevet EP 307 626 dans 80 l d'éthanol. On mélange 20 l (un quart) de cette solution avec 3,25 kg de mélange de triglycerides d'acides gras saturés en C6-C12 et on concentre sous vide pour éliminer complètement l'éthanol. On obtient une masse huileuse qui reste liquide et qui peut facilement être reprise dans 50 l d'hexane. On agite la solution obtenue pendant 30 min., on filtre après adjonction de 2 kg de Célite et on lave le gâteau de filtration avec deux fois 50 l d'hexane. On chasse l'hexane sous vide et on obtient 3,4 kg d'huile orange contenant environ 1,4% de constituants antioxydants. Cette huile est recyclée à trois reprises avec chaque fois 20 l de la solution éthanolique initiale en procédant à la concentration sous vide pour éliminer l'éthanol et ensuite au traitement avec l'hexane.

Par cette technique de cycles d'enrichissement progressif on obtient une huile légèrement trouble avec une teneur en antioxydants de 5,4%. On chauffe cette huile à 80°C et on la fait passer à un débit de 20 l par heure dans un échangeur de chaleur à surface raclée qui est maintenu à une température de 4°C avec de l'eau glacée. Le produit qui sort à une température de 8°C contient un dépôt cristallin. On filtre ce mélange pour obtenir une huile orange parfaitement limpide contenant 5,3% de composants antioxydants.

### Exemple 5

On extrait un mélange de 2 kg de romarin, 1 kg de sauge, 1 kg de thym et 1 kg d'origan deux fois avec 25 l d'éthanol à 25°C. On filtre et on mélange la phase éthanolique avec 1,5 kg de mélange de triglycérides d'acides gras saturés en C₆-C₁₂. On chasse l'éthanol pour obtenir une huile brune verte. On la mélange à 20°C avec 20 l d'hexane et on laisse reposer le mélange qu'on filtre pour en éliminer la phase solide et les gommes. On chasse l'hexane sous vide pour obtenir 1,76 kg d'une huile verte limpide ne conduisant à aucun dépôt même après 6 mois de stockage.

### Exemple 6

A partir de l'huile obtenue dans les exemples 2 ou 3, on fait une décoloration en mélangeant 500 g de cette huile avec 15 g de charbon actif. On chauffe ce mélange à 80° pendant 30 min. sous vide et on filtre sur une couche de Celite pour obtenir une huile de couleur jaune-orange clair. Le produit de départ avait une couleur brun-vert foncé. Ensuite on désodorise en faisant une distillation à contre-courant en couche mince avec de la vapeur surchauffée à 180°C. On opère sur l'installation utilisée avec un débit d'huile de 1 kg/h sous un vide de 1 mBar avec un temps de séjour de 25 sec et un rapport huile sur vapeur de 10:1.

## Revendications

1. Procédé d'obtention d'un extrait liquide antioxydant d'épices dans lequel on mélange un extrait de cet épice obtenu à partir d'un solvant polaire avec une huile saturée , on évapore le solvant polaire, on ajoute un solvant non polaire à la pâte ainsi obtenue, on homogénéise, on sépare le précipité et on évapore le solvant non polaire pour obtenir une huile limpide d'extrait antioxydant.

2. Procédé selon la revendication 1, caractérisé en ce qu'on mélange l'huile limpide d'extrait antioxydant avec une nouvelle fraction d'extrait d'épices dans un solvant polaire, on évapore le solvant polaire, on ajoute un solvant non polaire à la pâte ainsi obtenue, on homogénéise, on sépare le précipité et on évapore le solvant non polaire pour obtenir une huile limpide enrichie en extrait antioxydant et on répète éventuellement l'opération sur une nouvelle fraction d'extrait d'épices.

3. Procédé selon l'une des revendications 1 ou 2, caractérisé en ce que le solvant polaire est l'éthanol ou le méthanol et le solvant non polaire l'hexane, le cyclohexane ou l'éther de pétrole.

4. Procédé selon l'une des revendications 1 à 3, caractérisé en ce que l'huile est choisie dans le groupe constitué par un mélange de triglycérides d'acides gras saturés en C₆-C₁₂, huile d'olive, huile d'hybride de tournesol, huile d'hybride de carthame, oléine de beurre de cacao et oléine de graisse de sal.

5. Procédé selon une des revendications 1 à 4, caractérisé en ce que les épices traitées sont choisies parmi la sauge, le romarin, le thym, l'origan, la sarriette seuls ou en mélange.

6. Procédé selon l'une des revendications 1 à 5 caractérisé en ce qu'on mélange l'huile à la phase solvant polaire dans un rapport en poids huile sur extrait sec d'épice compris entre 10:1 et 1:2.

7. Procédé selon l'une quelconque des revendications 1 à 6, caractérisé en ce qu'on ajoute le solvant non polaire dans un rapport en poids huile sur solvant non polaire compris entre 1:5 et 1:20.

8. Procédé selon l'une des revendications 1 à 7, caractérisé en ce qu'on effectue sur l'huile limpide une décoloration sur charbon actif ou terre décolorante et une désodorisation par distillation à la vapeur d'eau à contre-courant en couche mince ou en film tombant.

## Claims

1. A process for the production of a liquid antioxidant spice extract, in which an extract of the spice obtained from a polar solvent is mixed with a saturated oil, the polar solvent is evaporated, a non-polar solvent is added to the paste obtained and, after homogenization, the precipitate is separated and the non-polar solvent is evaporated to obtain a clear oil of antioxidant extract.

2. A process as claimed in claim 1, characterized in that the clear oil of antioxidant extract is mixed with another fraction of spice extract in a polar solvent, the polar solvent is evaporated, a non-polar solvent is added to the paste obtained and, after homogenization, the precipitate is separated and the non-polar solvent is evaporated to obtain a clear oil enriched with antioxidant extract and the operation is optionally repeated with another fraction of spice extract.

3. A process as claimed in claim 1 or 2, characterized in that the polar solvent is ethanol or methanol and the non-polar solvent is hexane, cyclohexane or petroleum ether.

4. A process as claimed in any of claims 1 to 3, characterized in that the oil is selected from the group consisting of a mixture of saturated C₆₋₁₂ fatty acid triglycerides, olive oil, hybrid sunflower oil, hybrid safflower oil, cocoa butter olein and sal fat olein.

5. A process as claimed in any of claims 1 to 4, characterized in that the treated spices are selected from sage, rosemary, thyme, oregano, savory either individually or in admixture.

6. A process as claimed in any of claims 1 to 5, characterized in that the oil is mixed with the polar solvent phase in a ratio by weight of oil to dry spice extract of 10:1 to 1:2.

7. A process as claimed in any of claims 1 to 6, characterized in that the non-polar solvent is added in a ratio by weight of oil to non-polar solvent of 1:5 to 1:20.

8. A process as claimed in any of claims 1 to 7, characterized in that the clear oil is subjected to decoloration with active carbon or bleaching earth and to deodorization by thin-layer or falling-film countercurrent stripping with steam.

## Patentansprüche

1. Verfahren zur Gewinnung eines flüssigen antioxidativen Extrakts aus Gewürzen, bei dem man einen Extrakt, der aus dem jeweiligen Gewürz mit Hilfe eines polaren Lösungsmittels gewonnen wurde, mit einem gesättigten Öl vermischt, das polare Lösungsmittel abdampft, zu der so erhaltenen Paste ein unpolares Lösungsmittel zugibt, homogenisiert, den Niederschlag abtrennt und das unpolare Lösungsmittel abdampft, um ein klares Öl des antioxidativen Extrakts zu gewinnen.

2. Verfahren nach Anspruch 1, dadurch gekennzeichnet, daß man das klare Öl des antioxidativen Extrakts mit einer neuen Fraktion des Gewürzextrakts in einem polaren Lösungsmittel vermischt, das polare Lösungsmittel abdampft, zu der so erhaltenen Paste ein unpolares Lösungsmittel zugibt, homogenisiert, den Niederschlag abtrennt und das unpolare Lösungsmittel abdampft, um ein klares angereichertes Öl des antioxidativen Extrakts zu gewinnen, und daß man diese Vorgehensweise gegebenenfalls mit einer neuen Fraktion des Gewürzextrakts wiederholt.

3. Verfahren nach einem der Ansprüche 1 oder 2, dadurch gekennzeichnet, daß das polare Lösungsmittel Ethanol oder Methanol ist und das unpolare Lösungsmittel Hexan, Cyclohexan oder Petrolether ist.

4. Verfahren nach einem der Ansprüche 1 bis 3, dadurch gekennzeichnet, daß das Öl aus der Gruppe ausgewählt ist, die aus einer Mischung aus gesättigten C₆-C₁₂-Fettsäuretriglyceriden, Olivenöl, Sonnenblumenhybridöl, Saflorhybridöl, Kakaobutterolein und Salfettolein besteht.

5. Verfahren nach einem der Ansprüche 1 bis 4, dadurch gekennzeichnet, daß die behandelten Gewürze ausgewählt sind aus Salbei, Rosmarin, Thymian, Oregano, Bohnenkraut allein oder im Gemisch.

6. Verfahren nach einem der Ansprüche 1 bis 5, dadurch gekennzeichnet, daß man das Öl der Phase des polaren Lösungsmittels in einem Gewichtsverhältnis von Öl zu trockenem Gewürzextrakt im Bereich von 10:1 bis 1:2 beimischt.

7. Verfahren nach irgendeinem der Ansprüche 1 bis 6, dadurch gekennzeichnet, daß man das unpolare Lösungsmittel in einem Gewichtsverhältnis von Öl zu unpolarem Lösungsmittel im Bereich von 1:5 bis 1:20 zugibt.

8. Verfahren nach einem der Ansprüche 1 bis 7, dadurch gekennzeichnet, daß man das klare Öl einer Entfärbung mit Aktivkohle oder Bleicherde und einer Desodorierung durch Dünnschicht- oder Fallfilm-Destillation mit Wasserdampf im Gegenstrom unterwirft.
